Europäisches Patentamt

European Patent Office

Office européen des brevets

(11) Publication number: **0 208 250**
A2

# EUROPEAN PATENT APPLICATION

(21) Application number: 86108999.3

(22) Date of filing: 02.07.86

(51) Int. Cl.⁴: **G 01 N 5/00**
**G 01 N 23/00, G 21 F 9/00**

(30) Priority: 11.07.85 US 754055

(43) Date of publication of application:
14.01.87 Bulletin 87/3

(84) Designated Contracting States:
DE FR GB IT SE

(71) Applicant: WESTINGHOUSE ELECTRIC CORPORATION
Westinghouse Building Gateway Center
Pittsburgh Pennsylvania 15222(US)

(72) Inventor: Gross, John Francis
R.D. No. 2, Box 49D
New Alexandria PA 15670(US)

(72) Inventor: Meess, Daniel Clinton
Box 286
Madison PA 15663(US)

(72) Inventor: Corbett, James Allan
102 Larchwood Drive
Creek PA 15663(US)

(72) Inventor: Stimmel, James Russell
123 Ashford Hollow Road
West Valley NY 14171(US)

(74) Representative: Stratmann, Ernst, Dr.-Ing.
Schadowplatz 9
D-4000 Düsseldorf 1(DE)

(54) Characterization system for radioactive wastes.

(57) Systems for characterizing the weight, physical state and isotopic content of radioactive waste bearing containers. Containers are supplied to a weighing station (10) where the weight density of the contents may be determined. A conveyor (12) then takes the container to a turntable (14) where the entire container is scanned for gamma radiation to help determine the isotopic content. The gamma source located on the opposite of the turntable (14) from the gamma scanner (16) allows calibration of the gamma scanner (16) and compensation for attenuation of radiation by the container. A conveyor (18) then takes the waste container to a second turntable (20) where it is x-rayed (22, 24), to detect vibrations in free liquids within the container. A predetermined fraction of the containers is then directed to an active neutron analyzer to determine the characteristics of neutrons emitted from the container. The remaining fraction of drums bypasses the active neutron analyzer. In either case the drums are then removed from the characterization station. A calibration container containing waste of known isotopic content may also be included in the system and periodically pass through the system to properly calibrate all stations.

FIG. I

## DR.-ING. ERNST STRATMANN

**PATENTANWALT**

D-4000 DÜSSELDORF 1 · SCHADOWPLATZ 9

0208250

.8623 EU

Düsseldorf, July 1, 1986

Westinghouse Electric Corporation
Pittsburgh, Pennsylvania, USA

1

## SYSTEMS FOR CHARACTERIZING RADIOACTIVE WASTES

This invention relates to a system for characterizing the weight, physical state and isotopic content of the radioactive wastes within a waste container before processing and disposal.

Radioactive waste is generated by a variety of sources such as hospitals, laboratories and nuclear power plants. In certain cases these wastes can be packed into 55 gallon drums and shipped to disposal facilities where the drums are processed and then buried in prepared burial sites.

The waste disposal facility generally includes a characterization station that has detectors for verifying that the contents of any containers received conform to the shipping manifest and include only materials authorized for such disposal. A facility employing such a system is described in U.S. Patent Application Serial No. 627,964 (Mallory et al.), filed July 5, 1984.

One type of detector employed is used to measure the quantity and energy spectrum distribution of the gamma radiation emanating from the waste in the containers. By measuring these two properties of the gamma radiation fluence it is possible to determine the type and the quantity of radioactive waste present in a container. Photons comprising the gamma radiation fluence are detected and, by conveying the detection signal to a device such as a multi-channel spectrum analyzer it is possible to determine both the energy of the detected photons and the quantity of photons in each narrow segment of the energy spectrum.

Since each type of radioactive isotope has its specific unique signature of decay radiation it is possible to analyze the output of multi-channel spectrum analyzer to determine the quantity and types of radioactive materials present in a waste container.

A particularly useful gamma radiation detection apparatus that allows a rapid relatively inexpensive method for measuring gamma fluence from a waste disposed container while keeping human exposure to a minimum is described in U.S. Patent Application Serial No. 754,054 (Gross), filed July 11, 1985. This device consists of a plurality of vertical shielded radiation detectors that simultaneously measure gamma radiation from different positions of the waste container. These detectors provide a representative gamma fluence along the line formed by the multiple detectors. The waste container is then rotated to obtain further pluralities of simultaneous measurements which are then combined to obtain a fluence representative of the entire waste container.

A second measurement that is taken is the combined weight of the container and its radioactive contents. This measurement allows calculation of total mass of radioactive waste in the container and allows calculation of the specific activity of the material inside the container.

A third characterization that is made is the bulk waste visual contents and detection of liquids. Current federal requirements as provided in 10 CFR 61 specify that drums buried in low level radioactive disposal sites contain less than 1% free liquid. While rotating the drums the contents are x-rayed and liquids are detected in these x-ray images by showing vibration patterns in the free liquid made by the rotation of the drum.

What is desired, especially in currently designed waste disposal facilities that attempt to achieve a high throughput of waste disposal containers, is a radioactive waste characterization system that is fast, relatively inexpensive and does not require close human contact in order to keep human radiation exposure to a minimum.

Accordingly, the present invention resides in a system for characterizing the weight, physical state and isotopic content of radioactive waste within a waste container, characterized in that said system comprises a weighing means for determining total weight of the container and said radioactive waste, means for supplying the container to said weighing means, turning means for rotating said container, means for conveying the container from the weighing means to said turning means, gamma scanning means that in conjunction with the rotation of the container by the turning means measures the gamma radiation fluence of the radioactive waste within the container from which the isotopic content may be derived, x-raying means that in conjunction with rotation of the container by the turning means displays vibration of liquids within the container from which the total liquid content may be derived and means for removing the container from said turning means.

A radioactive waste characterization system is provided that allows a rapid method for determining the weight, physical state and isotopic content of radioactive waste in a waste container while keeping human exposure to a minimum. The system supplies waste containers to a weighing station where a combined weight of the container and the waste is determined. Conveyor then transports the container to a gamma scanner that determines the gamma radiation fluence of the waste which in turn allows calculation of the isotopic content. The conveyor then transports the waste container to an x-ray system where x-rays are emitted and measured on the opposite side of the container while the container is rotated. This allows the amount of free liquid to be determined and general bulk characterization of the contents to be made. The conveyor then transports the drum to a processing facility for ultimate disposal. An additional element of the system may be conveyors for transporting a drum containing known isotopic material for periodic calibration of the gamma scanner. Another possible element of the system is an active neutron analyzer that allows further characterization of the waste contained within the drum. Although neutron analysis requires a longer period of time to complete only a fraction of the containers must be analyzed in this way to characterize the entire stream of waste. The system may therefore provide for an element that directs a fraction of the containers being processed to the active neutron analyzer while diverting the remaining fraction around the active neutron analyzer.

In order that the invention can be more clearly understood, convenient embodiments thereof will now be described by way of example, with reference to the accompanying drawings in which:

Figure 1 is an isometric view of a radioactive waste characterization system according to a first embodiment;

Figure 2 is a schematic diagram of a radioactive waste characterization system according to a second embodiment;

Figure 3 is a schematic diagram of a characterization system similar to that of Figure 1 with the additional element of a drum containing standardization calibrated waste and means for transporting it to the segmented gamma scanner; and

Figure 4 is a schematic diagram of the characterization system of Figure 3 with the addition of an active neutron analyzer and means for directing a fraction of the waste containers to the neutron analyzer.

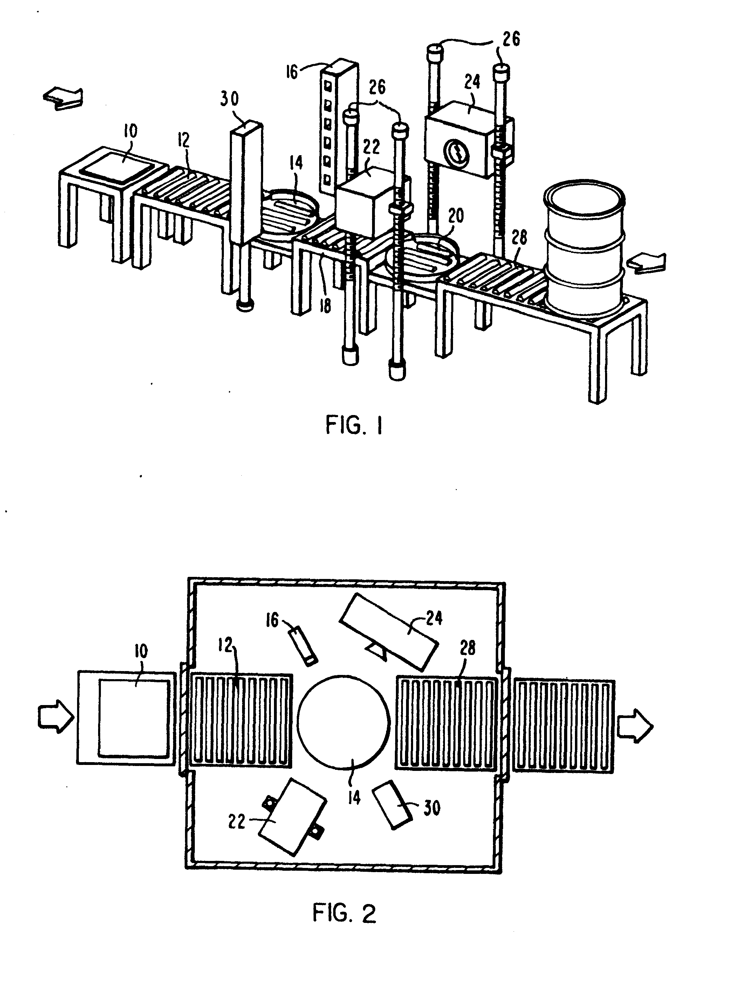

Referring to Figure 1, means for supplying containers to the weighing station 10 such as a conveyor, shielded fork lift or overhead crane and hoist, not shown, periodically and regularly supply waste bearing containers to the radioactive waste characterization system. A weighing means such as weighing station 10 gives the combined weight of the container and the contents thereof. Because the container is of a standard design the weight of the radioactive material itself can be calculated and from that the density of the material and the specific radioactivity are derived.

A means for conveying the container from the weighing means to a turning means such as conveyor 12 removes the weighed drum from the weighing station and transports it to the gamma measurement station. This station is comprised of a first turning means such as turntable 14 for rotating the container proximate a gamma scanning means such as scanner 16 about the major axis of the container. The gamma scanner 16 is comprised of a plurality of detectors which allows a measurement of the total gamma fluence of the waste bearing container without movement in the vertical direction of either the scanner or the container.

Measurement of the gamma fluence allows independent verification of the isotopic composition of the waste inside the container.

A second conveying means 18 removes the container from the turntable 14 and transports it to a second turning means such as turntable 20 which is part of an x-raying means used for characterization of the radioactive material's physical state. Because current government regulations prohibit greater than 1% free liquid in any low level waste burial container it is necessary that each container be analyzed for free liquids. The x-raying means is comprised of an x-ray source 22 and an x-ray receptor displaying means such as a fluoroscope 24 located on opposite sides of the container. The source 22 generates x-rays which interact with the drum and its contents some being absorbed or reflected others passing through. Those passing through are received by the fluoroscope 24 and displayed for viewing on an x-ray receptor displaying means such as a conventional television monitor (not shown).

Rotation of the drum on turntable 20 not only allows a full 360° view of the container but also causes liquids within the container to vibrate, a phenomenon that can be detected by scope 24 and displayed on the television monitor.

Both the x-ray source 22 and the receptor displaying means 24 can travel vertically along rails 26 to allow a full vertical inspection of the drum.

Finally a means for removing from the container from the turning means such as the turntable 20 is provided as by a conveyor 28 shown or other means such as shielded fork lift or a crane and hoist.

An additional element that may be provided is a gamma ray emitter 30 located on the opposite side of the turntable 14 from the gamma scanner 16 that comprises a gamma source of known output that is used for determining the gamma radiation attenuation caused by the container itself and for periodic calibration of the gamma scanner 16 when no container is present. The preferred emitter is Eu-152 which provides gamma radiation from 0.122 MeV to 1.408 MeV, the full range of gamma energies expected to be encountered. Eu-152 has the further advantage of not being found in most waste generated since it is not a fission product.

Figure 2 shows an alternate embodiment of the invention shown in Figure 1. Here as in the embodiment shown in Figure 1 containers are supplied to the weighing station 10 and then removed by the conveying means 12 to turntable 14 where the gamma characteristics are determined by the gamma scanner 16. Rather than transporting the drum to a second turntable 20 by a second conveyor 18 as shown in Figure 1, the drum remains on turntable 14 while being x-rayed by the system comprising x-ray source 22 and x-ray receiving display means 24.

After completion of the gamma and x-ray characterization the drum is removed from turntable 14 by conveying means 28. As in Figure 1 a calibration source 30 is provided for periodic adjustment of the gamma scanner 16.

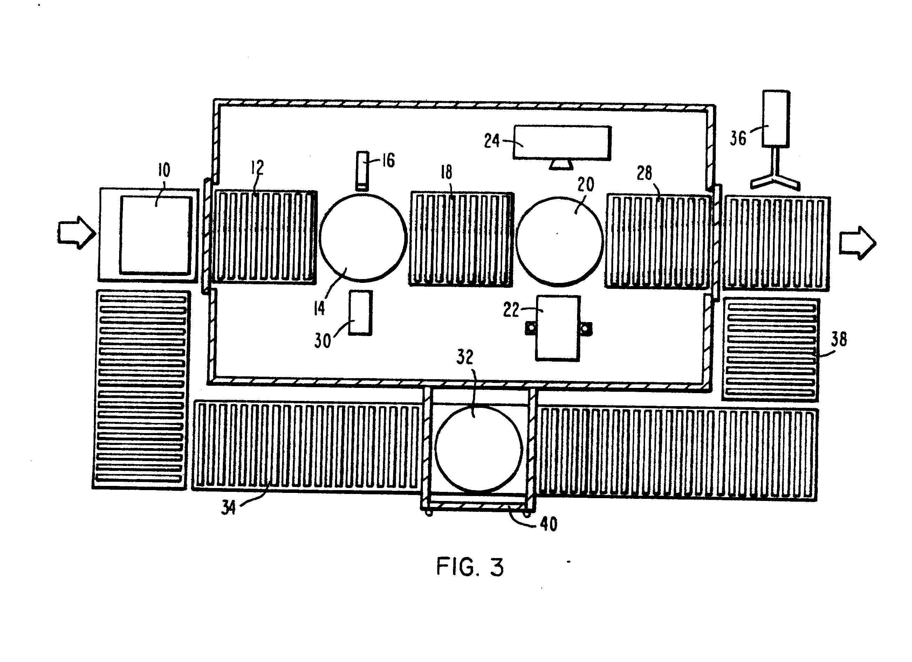

Referring to Figure 3 a waste characterization system is shown similar in arrangement to that of Figure 1 with additional elements. These elements constitute a system for periodically calibrating the characterization system with a drum containing known standardized radioactive isotopes.

A calibration container holding known quantities of known radioactive isotopes 32 is periodically conveyed to the weighing station 10 by a means for periodically conveying the calibration container such as conveyor 34. After passing through the characterization stations the drum reaches the means for removing containers such as conveyor 28 where it is pushed off of the conveyor by drum pusher 36 onto a means for returning the calibration container to its storage area such as conveyor 38. The storage area for the calibration container is shielded by walls 40 to prevent irradiation of people.

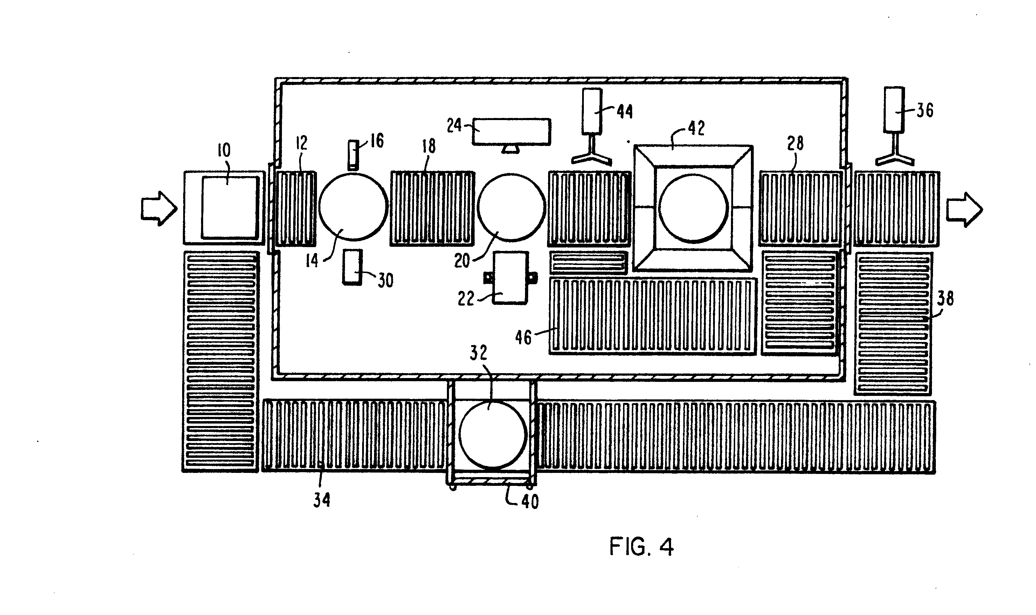

Figure 4 shows a waste characterization system as arranged in Figure 3 with additional elements for active neutron analysis of waste bearing containers.

Means for removing the container from said turntable 20 includes a means for conveying a predetermined fraction of the containers received to a neutron analyzer 42. The remaining fraction of containers are directed by drum pusher 44 to a means for bypassing the neutron analyzer and conveying the drums to the removing conveyor 28 such as by conveyor 46.

The neutron analyzer 42 measures and displays the number and energy of neutrons emitted from a waste container that is placed within the neutron analyzer for a predetermined time. Containers placed within the neutron analyzer are removed after this predetermined time to conveyor 28.

The neutron analyzer eliminates the need to open a specified fraction of containers passing through the characterization system by providing sufficient information on neutron activity to allow complete characterization of the waste nuclear properties. Although neutron characterization requires a significantly longer period of time to obtain than the weighing, gamma scanning, and x-raying only a fraction, approximately one out of every 20 containers, must be so analyzed. For this reason the average time to totally characterize a waste bearing container is 6½ minutes. This represents in savings in processing time of at least a factor of three.

DR.-ING. ERNST STRATMANN
PATENTANWALT
D-4000 DÜSSELDORF I · SCHADOWPLATZ 9

0208250

.8623 EU

Düsseldorf, July 1, 1986

Westinghouse Electric Corporation
Pittsburgh, Pennsylvania, USA

CLAIMS:

1. System for characterizing the weight, physical state and isotopic content of radioactive waste within a waste container, characterized in that said system comprises a weighing means for determining total weight of the container and said radioactive waste, means for supplying the container to said weighing means, turning means for rotating said container, means for conveying the container from the weighing means to said turning means, gamma scanning means that in conjunction with the rotation of the container by the turning means measures the gamma radiation fluence of the radioactive waste within the container from which the isotopic content may be derived, x-raying means that in conjunction with rotation of the container by the turning means displays vibration of liquids within the container from which the total liquid content may be derived and means for removing the container from said turning means.

2. A system according to claim 1, characterized in that the x-raying means comprises an x-ray source and an x-ray receptor displaying means for viewing the the x-ray interactions with the container and the radioactive waste therein, said source and said receptor displaying means being located on opposite sides of the container.

3. A system according to claim 1 or 2, characterized in that the system includes a gamma ray emitter of known output located on the opposite side of the container from the gamma scanning means for determining gamma attenuation caused by the container and for periodic calibration of the gamma scanning means when no container is present.

4. A system according to claim 1, 2, or 3, characterized in that turning means comprises a first turning component and a second turning component for rotating the waste container in the operative area of the gamma scanning means and the x-raying means respectively, and second conveying means for transporting said container from said first turning component to said second turning component.

5. A system according to any of claims 1 to 4, characterized in that the system includes a calibration container holding known quantities of known radioactive isotopes therein; and means for periodically conveying said calibration container to the turning means.

6. A system according to any of claims 1 to 5, characterized in that the system includes a neutron analyzer that measures and displays the number and energy of neutrons emitted from a waste container placed within the neutron analyzer for a predetermined time, means for removing said container from said neutron analyzer, the means for removing the container from the turning means includes means for conveying the container to the neutron analyzer.

7. A system according to claim 6, characterized in that the means for removing the container from the turning means includes means for conveying a predetermined fraction of containers received from the turning means to the neutron analyzer while the remaining fraction bypasses said neutron analyzer.

1 / 3

0208250

FIG. 1

FIG. 2

FIG. 3

FIG. 4

0208250